# EUROPEAN PATENT SPECIFICATION

(11) **EP 4 454 203 B1**
(45) Date of publication and mention of the grant of the patent: **05.11.2025**
(21) Application number: 22835828.9
(22) Date of filing: 19.12.2022
(51) Int. Cl.: H04L 9/06, G06F 21/31, G06F 21/44, H04L 9/32, H04L 9/40, B66B 1/34, B66B 25/00

(54) **METHOD OF DEPLOYING A SAFETY-RELATED SOFTWARE IN A PASSENGER TRANSPORT INSTALLATION, PASSENGER TRANSPORT INSTALLATION, AND SAFETY-RELATED SOFTWARE UPDATE INFRASTRUCTURE**
VERFAHREN ZUM EINSATZ EINER SICHERHEITSRELEVANTEN SOFTWARE IN EINER FAHRGASTTRANSPORTINSTALLATION, FAHRGASTTRANSPORTINSTALLATION UND SICHERHEITSRELEVANTE SOFTWARE-UPDATE-INFRASTRUKTUR
PROCÉDÉ DE DÉPLOIEMENT D'UN LOGICIEL DE SÉCURITÉ DANS UNE INSTALLATION DE TRANSPORT DE PASSAGERS, INSTALLATION DE TRANSPORT DE PASSAGERS, ET INFRASTRUCTURE DE MISE À JOUR DE LOGICIEL DE SÉCURITÉ

(30) Priority: 20.12.2021 EP 21215835
(43) Date of publication of application: 30.10.2024
(73) Proprietor: INVENTIO AG, 6052 Hergiswil (CH)
(72) Inventor: MICHEL, David, 6343 Rotkreuz (CH); PFISTER, Martin, 6003 Luzern (CH)
(74) Representative: Inventio AG
(86) International application number: PCT/EP2022/086539
(87) International publication number: WO 2023/117833

(56) References cited:
- EP-A1- 3 915 912
- US-A1- 2011 247 901
- US-A1- 2018 157 482

## Description

This disclosure relates to the installation of safety-related software on a safety element in a passenger transport installation, such as an elevator. This disclosure particularly relates to the improved security of over-the-air updates of safety-related software. The disclosure particularly relates to the use of a separate deployment system and confirmation system for safely installing safety-related software on a safety element in a passenger transport installation.

Passenger transport installations, such as elevators, escalators and moving walkways, typically include safety elements, i.e. safety relevant components, such as controller modules, safety sensor modules, safety units, automatic protection systems, safety-related systems or the like. Such safety elements may be programmable and can, for example, monitor and control aspects of the passenger transport installation by executing a software, such as a software program.

Safety elements must conform with high safety standards. For example, in passenger transport installations such as elevators, safety-relevant devices may be required to conform to a standard such as EN 81 - PESSRAL and/or IEC 61508, and may require a minimum safety integrity level (SIL) of at least 2 or 3.

Since the software installed on a programmable safety element is an integral component required for the correct operation of the safety element, no untrusted, incompatible, uncertified and/or corrupted software may be installed on a safety element. Thus, to install a software, such as an update, on a safety element, it is often necessary to physically insert a storage device, such as a memory card comprising the software, into the safety element, and manually perform the installation. While this generally prevents the deployment of untrusted software, the installation process may be inefficient and time consuming. Document US 2011/247901 is considered to be a relevant document in securely accessing a main controller of an elevator for maintenance purposes and US2018/157482 and EP 3 915912 are relevant documents in the field of downloading software on elevator components.

Thus, there is a need for a solution that facilitates the deployment of safety-related software in an efficient manner, while simultaneously preventing the deployment of untrusted or corrupted software to the safety element. Such needs may be met, at least in part, with the subject-matter of the independent claims. Advantageous embodiments are defined in the dependent claims and the specification that follows.

According to an aspect, a method of deploying a safety-related software to a safety element in a passenger transport installation including the safety element is described. The method includes making the safety-related software available to the safety element by a deployment system, sending a confirmation request including a challenge token to a confirmation system. The method includes receiving, by the confirmation system, after receiving the confirmation request, a confirmation input from a user. The method includes, by the confirmation system, performing a calculation on the challenge token to create a confirmation token from the challenge token. The method includes, by the safety element, performing the calculation on the challenge token to create a verification token from the challenge token. The method includes, by the confirmation system, after receiving the confirmation input, sending a confirmation indicator including the confirmation token to the safety element. The method further includes, by the safety element, verifying the confirmation token based on the verification token. If the confirmation token matches the verification token, the method includes installing the safety-related software on the safety element.

According to an aspect, a passenger transport installation including a safety element is described. The safety element includes a controller, a memory, and a communication module. The safety element is configured for receiving an availability indicator indicating an availability of safety-related software from a deployment system, creating a challenge token, sending a confirmation request including the challenge token to a confirmation system, performing a calculation on the challenge token to create a verification token from the challenge token, receiving a confirmation indicator including a confirmation token from the confirmation system, comparing the confirmation token with the verification token, and, if the confirmation token matches the verification token, installing the safety-related software on the safety element.

According to an aspect, a safety-related software update infrastructure for a passenger transport installation is described. The software update infrastructure includes a safety element according to embodiments described herein. The update infrastructure further includes a deployment system communicatively connected to the safety element. The deployment system is configured for making the safety-related software available to the safety element. The software update infrastructure includes a confirmation system communicatively connected to the safety element. The confirmation system is configured for receiving a confirmation request from the safety element. The confirmation request includes a challenge token. The confirmation system is further configured for performing a calculation on the challenge token to create a confirmation token from the challenge token, receiving a confirmation input from a user, and sending a confirmation indicator including the confirmation token to the safety element.

According to an aspect, a passenger transport installation is described. A passenger transport installation may be an infrastructure for the transport of passengers. A passenger transport installation may particularly be an elevator, particularly a passenger elevator and/or an elevator suitable for the transport of passengers. A passenger transport installation may be an escalator and/or a moving walkway. The passenger transport installation may be, for example, installed in buildings or other structures, such as boats, aircraft, or construction equipment. Automotive vehicles, such as cars, trains or busses, are not considered passenger transport installations in the context of this disclosure. The passenger transport installation may have a required safety rating suitable for the transport of passengers, which may be, according to e.g. local legal requirements, higher than the required safety rating for transport installations not intended for the transport of passengers, such as cargo transport installations like freight elevators, conveyors or the like.

According to an aspect, a safety element is described. The safety element may be a safety unit suitable for safety-related tasks. The safety element may be a device according to international standard IEC 61508 at the date of filing of this application. The safety element may be a device, particularly a safety-related device, according to EN 81 - PESSRAL (Programmable Electronic Systems in Safety Related Applications for Lifts) at the date of filing of this application. The safety element may be a device according to directive 2014/33/EU, and/or standard EN 81-50 at the date of filing this application. The safety element may be rated according to safety integrity level (SIL) 1, preferably SIL 2, even more preferably SIL 3. The safety element may be an automation component of a passenger transport installations, such as a controller, e.g. an elevator controller, a brake controller, a door controller and/or a drive controller. The safety element may also be a sensor and/or a monitoring device, particularly a safety-related sensor and/or monitoring device, such as a speed sensor, an acceleration sensor, a brake sensor, and/or a position sensor.

The safety element may be an actuator such as, for example, a brake actuator, such as an actuator for a motor brake, a car brake, or a safe torque off (STO), e.g. of an inverter. The safety element may be a safety switch, e.g. for opening and/or closing a safety chain of the elevator system, or a contactor, e.g. for interrupting a power. The safety switch may be a safety relay or a solid state switching element.

According to an aspect, a challenge token is described. The challenge token may be a random number. The challenge token may be a randomly generated value. The challenge token may be a unique random number, e.g. a random number having a negligible chance of collision. The challenge token may be randomly generated for each confirmation request. The challenge token may be a unique identifier, such as a Universally Unique Identifier (UUID), a Globally Unique Identifier (GUID), particularly a (pseudo)random UUID, or any random or pseudorandom number or value having a length of at least 64 bits, particularly at least 128 bits, or even at least 256 bits. The random number may be hashed, e.g. by an algorithm such as MD5, SHA-1, SHA-256 or any keyed or unkeyed cryptographic hash function publicly known at the date of filing of this application.

According to an aspect, a calculation is described. The calculation may be performed on the challenge token. The calculation may be deterministic. Deterministic, in the context of this application, may be understood as the calculation, when performed on identical input values, resulting in the same result. The calculation may be a function that, when performed on a given input, reliably results in a consistent, predictable result.

According to an aspect, the calculation may include a hash function, and/or a checksum function. The calculation may be specific for each pair of trusted devices, the pair of trusted devices including at least one of each the confirmation system and the safety element, e.g. only a trusted confirmation system may be able to perform the calculation and arrive at the same result as the safety element. This, however, should not be understood as the underlying algorithm(s) for each group of trusted devices being different.

According to an aspect, cryptographic algorithms may be utilized to perform the calculation. The calculation may be performed, for example, on data including the challenge token. The data including the challenge token may further include a constant value, such as a key (i.e. a cryptovariable), such as a private key, e.g. a key stored in the safety element and/or the confirmation system. The constant value may be included, directly or indirectly, in the calculation, particularly such that a calculation performed on a challenge token with no or a different constant value and/or key results in a different result than a calculation performed on the data including the constant value.

According to an aspect, the calculation may include a cipher, however, the methods and systems described herein do not require the ciphertext to be exchanged in full. Particularly, a value derived from the ciphertext, such as a prefix, a postfix, or a hash, may be the result of the calculation. For example, a hash and/or checksum function performed on a challenge token that includes, e.g. by concatenation, addition, XOR-operation or the like, the constant value, may be utilized to generate the confirmation token and/or the verification token.

Reference will now be made in detail to the various embodiments, one or more examples of which are illustrated in the figures. Within the following description of the drawings, the same reference numbers refer to same components. Generally, only the differences with respect to individual embodiments are described. Each example is provided by way of explanation and is not meant as a limitation. Further, features illustrated or described as part of one embodiment can be used on or in conjunction with other embodiments to yield yet a further embodiment. It is intended that the description includes such modifications and variations. The invention is defined in the independent claims.
- Fig. 1: shows a method of deploying a safety-related software to a safety element in a passenger transport installation; and
- Fig. 2: shows safety-related software update infrastructure for a passenger transport installation.

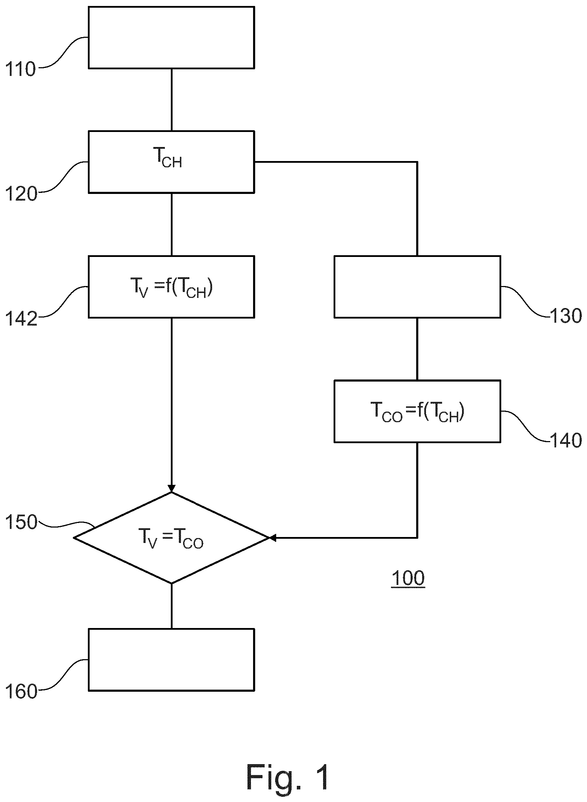

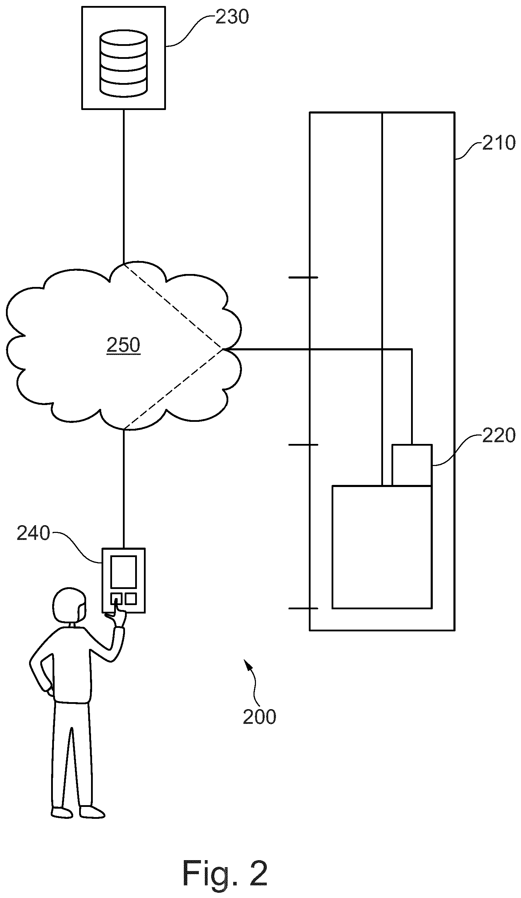

Fig. 1 shows a method 100 of deploying a safety-related software. The method 100 may be performed in a software update infrastructure, such as the software update infrastructure 200 described in further detail with reference to Fig. 2. The method 100 includes the use of a safety element, such as the safety element 220, the use of a deployment system, such as the deployment system 230, and the use of a confirmation system, such as the confirmation system 240, which will be described in further detail with reference to Fig. 2.

The method includes making 110 the safety-related software available to the safety element by the deployment system. Making the safety-related software available may include providing the software, e.g. as a downloadable file, data packet or installation packet, on the deployment system. Making the software available may include the safety element requesting information related to the software from the deployment system, such as sending a request to the deployment system if a software is available, and the deployment system responding to the request, e.g. by transmitting information related to the available data packets and/or safety-related softwares. Sending a request from the safety element may be automatic, e.g. performed at predefined times or time intervals, or may be performed after a manual input, such as a service technician instructing the safety element, e.g. via an input on the confirmation system, to search for available updates. Likewise, additionally or alternatively, the deployment system may send a request to the safety element to inform the safety element that a new software is available. An indicator indicating a new software being available may be stored in a memory of the safety element.

The method 100 includes sending 120 a confirmation request including a challenge token T_{CH} to a confirmation system, the confirmation system being a different system from the deployment system. Sending the confirmation request may include the safety element being communicatively connected to the confirmation system, and may further include receiving the confirmation request by the confirmation system. In particular, the challenge token T_{CH} may be generated by the safety element, particularly after having been and/or during being communicatively connected to the confirmation system. Communicatively connecting the confirmation system may include logging into the confirmation system, e.g. by providing a user login and a password. More specifically, the challenge token T_{CH} may be generated after the confirmation system and the safety element have exchanged data indicating, to the safety element, that a software should be installed or reviewed for installation, such as e.g. selecting a software update option with the confirmation system. This may beneficially result in a new challenge token T_{CH} being generated prior to each potential confirmation input resulting in the installation of the safety-related software.

The challenge token T_{CH} may be a challenge token according to an aspect described herein, e.g. a random number or value, a UUID or the like. Sending the confirmation request may include sending, with the confirmation request and/or included in the confirmation request, additional information, e.g. identifiers identifying the software, the safety element, the deployment system, the confirmation system, a user information such as a user login of the service technician, a timestamp or the like. According to embodiments, the additional information may be included in the challenge token.

The method 100 includes receiving 130 a confirmation input from a user by the confirmation system, after the confirmation system has received the confirmation request. The confirmation input may be an input provided by the user, e.g. a service technician, in response to a prompt by the confirmation system if the software should be installed or not installed. The confirmation input may confirm that the user intends the software to be installed. The method may include not installing the software in case no confirmation input is received, and/or an input indicating a non-confirmation is received.

According to embodiments, the confirmation system of the method 100 may be configured to be accessed by a service technician. The accessing the confirmation system may include providing login credentials to the confirmation system. Additionally, or alternatively, the confirmation system may be personalized for each user, e.g. a personal device of the user to be used or usable exclusively by the user. The method 100 may further include, e.g. before receiving 130 the confirmation input, informing the service technician about the safety-related software being available. The information about the safety-related software being available may be provided by the safety element.

For example, according to embodiments, a user, such as a service technician, may be provided, by the confirmation system, with a selection of one or more available software updates, and select available software updates. The selection may trigger the safety element to send 120 the confirmation request, and the user may be presented with a prompt to confirm the selection.

The method 100 includes performing a calculation 140, 142 on the challenge token. The calculation 140 is performed by the confirmation system and results in a confirmation token T_{CO}, and the calculation 142 is performed by the safety element and results in a verification token T_{V}. Both the confirmation token T_{CO} and the verification token T_{V} are a result of the function f being performed on the challenge token T_{CH}, i.e. T_{V} = T_{CO} = f(T_{CH}).

The calculation, i.e. the function f, may be performed according to an aspect described herein, and may particularly include the use of an algorithm, particularly a cryptographic algorithm, such as a hash algorithm and/or a checksum algorithm.

According to embodiments, the calculation may include the use of a common constant value such as a key. The function utilizing a first key may be a function f, and the function utilizing a second key different from the first key may be a function g, so that T_{V} = F(T_{CH}) ≠ T_{CO} = g(T_{CH}). Utilizing a common function and/or algorithm with an identical key beneficially results in the calculation of the verification token T_{V} and the confirmation token T_{CO} from the challenge token T_{CH} to be identical if both calculations utilize the same key, and the tokens T_{V} and T_{CO} being different if the calculations utilize a different key. Beneficially, it is therefore generally not possible for an untrusted confirmation system, i.e. a device not in possession of the key, to generate a confirmation token T_{CO} to confirm the installation of the software.

According to embodiments, the method 100 may include, before calculating the verification token T_{V} and the confirmation token T_{CO}, exchanging the key between the safety element and the confirmation system, e.g. during a setup operation.

According to embodiments, the calculation f may include a hash function, particularly include a cryptographic hash function such as a keyed cryptographic hash function, e.g. HMAC, KMAC, MD6, PMAC, Poly1305-AES, SipHash, UMAC or VMAC. The key of the keyed cryptographic hash function may be the constant value described herein with reference to an aspect described herein. The hash function may be an unkeyed cryptographic hash function, and a key, such as the constant value described herein with reference to an aspect, may be included in the calculation, e.g. according to an aspect described herein, e.g. by XORing the constant value and the confirmation token T_{CO} before utilizing the hash function. The unkeyed cryptographic hash function may be, for example, BLAKE-256, BLAKE-512, BLAKE3, ECOH, HAS-160, MD4, MD5, RIPEMD, RIPEMD-128, RIPEMD-160, RIPEMD-320, SHA-1, SHA-256, SHA-384, SHA-512, SWIFFT, Tiger or Whirlpool. Combinations of two or more keyed and/or unkeyed cryptographic hash functions may be employed, e.g. for added security and/or for increasing the computational load of the calculation. The hash functions and/or algorithms described herein are only given as examples and should not be understood as a limitation. Other hash functions or checksum functions, and even ciphers publicly known at the date of filing of this application may be utilized without deriving from the scope of this disclosure. Furthermore, according to embodiments, the calculation is not limited to the use of cryptographic functions or algorithms, and the calculation may include any operation or series of operations, including e.g. arithmetic operations, such as addition or multiplication.

The method 100, e.g. following the calculation 140, includes sending a confirmation indicator including the confirmation token to the safety element. The confirmation indicator is sent by the confirmation system. Sending the confirmation request may include the safety element being communicatively connected to the confirmation system, and may further include receiving the confirmation request by the safety element. Performing the calculation 140 on the challenge token may be performed after receiving the confirmation request, or preferably after receiving the confirmation input 130. Sending the confirmation indicator may include sending, with the confirmation indicator and/or included in the confirmation indicator, additional information, e.g. identifiers identifying the software, the safety element, the deployment system, the confirmation system, a user information such as a user login of the service technician, a timestamp or the like. Sending the confirmation indicator may further include sending a non-confirmation. The method may include not installing the software upon receiving a confirmation indicator indicating a non-confirmation.

The method 100 includes verifying 150 the confirmation token T_{CO} based on the verification token T_{V}. The verification is performed by the safety element. The verification may be performed by comparing the confirmation token T_{CO} and the verification token T_{V}, and identifying if the tokens match, e.g. if the tokens are identical or not identical. For example, the tokens may be compared by subtracting the value of one token from the other token and checking the remaining value, the tokens being identical if the remaining value is zero, or by executing, e.g. by a software executed on a processor, an operation corresponding to the pseudocode "if (T_{CO} == T_{V}); then".

The method 100 includes, if the confirmation token T_{CO} matches the verification token T_{V}, installing the safety-related software on the safety system, particularly only if the confirmation token T_{CO} matches the verification token T_{V}. The method 100 may include not installing the software if the confirmation token T_{CO} does not match the verification token T_{V}. Installing the software may include initiating the update process. Installing the software may include requesting and/or receiving the software from the deployment system, i.e. transferring and/or downloading the software from the deployment system onto the safety element. Installing the software may include starting an installation routine. **In**stalling the software may include installing the software immediately, or with a timed delay and/or at a predetermined time, such as at a prescheduled downtime of the passenger transport installation. The predetermined time may be selectable by a user via the confirmation system. An indicator indicating the selected predetermined time may be included in the confirmation input.

According to embodiments, the method 100 may include a timeout, and a timeout function may be implemented in the safety element 220. For example, the challenge token may be valid only for a limited time, such as for less than 30 seconds, less than one minute, less than 2 minutes or less than 5 minutes after the generation of the challenge token. The safety element may be configured for not installing a safety-related software even if the challenge token matches the verification token, under the condition that the confirmation indicator was received outside of the limited timespan.

Referring now to Fig. 2, a safety-related software update infrastructure 200 for a passenger transport installation 210 is described. The passenger transport installation includes at least one safety element 220. **In** the example shown in Fig. 2, the passenger transport installation 210 is an elevator system, the safety element 220 being installed on a car of the elevator system.

The safety element 220 includes a controller. The controller may be a processing unit, such as a processor, a microprocessor, a central processing unit (CPU) or a logic circuit. The processing unit may be configured for executing a software, such as the safety related software, e.g. during normal operation of the safety element. The controller may further be configured for executing a software, such as an update software, for performing the method according to embodiments described herein, particularly for generating the random number, performing the calculation, and installing the safety-related software, e.g. by storing the safety-related software in a memory.

The safety element 220 includes a memory. The memory may be communicatively connected to the controller. The memory may include a storage memory. The memory may include a transient memory, such as a random-access memory (RAM). The memory may include, e.g. in the storage memory, the safety related software and particularly the update software, to be accessed by the controller, e.g. for loading the software into RAM for the software to be executed by the controller. The memory, particularly the storage memory, may be configured for storing an updated safety-related software prior to installing the updated safety-related software.

The safety element 220 includes a communication module. The communication module may be a network interface for connecting, particularly communicatively connecting, the device to a packet-based network 250, such as a data network, in particular a local data network, or, e.g. via a node, an access point, a router or the like, a global data network. The communication module may be a networking module, such as a modem, such as an Ethernet module, a WiFi module, a 2G, 3G, 4G, LTE, Bluetooth, 5G module or the like. The packet-based network 250 may be a TCP/IP network such as LAN, WAN, and/or Internet. The communication module may be communicatively connected to the controller. The communication module may be configured for sending and receiving data via the packet-based network 250, particularly for sending and receiving data to and from the deployment system 230 and the confirmation system 240.

The safety-related software update infrastructure 200 includes a deployment system 230. The deployment system is, at least intermittently, communicatively connected to the safety element, e.g. via the packet-based network 250. The deployment system 230 is configured for making the safety-related software available to the safety element, e.g. by providing the safety-related software as a downloadable data packet. The deployment system 230 may be an update server, particularly a remote update server. The deployment system 230 may provide data packets including the safety-related software, and may further provide information related to the data packets, such as a version number, and/or a compatibility indicator indicating if the safety-related software is suitable, recommended or even mandatory for installation on a particular safety element type. The deployment system 230 may be configured for safely deploying the safety-related software, such as by providing the data packets as signed data packets, providing a checksum of the data packet, and/or providing a server authentication certificate. Beneficially, data packets including the safety-related software from a deployment system 230 configured for safely deploying the safety-related software may ensue that the safety element does not receive untrusted or misconfigured safety-related software.

According to embodiments, the deployment system 230 may be configured for receiving a challenge token and performing a calculation on the challenge token to generate a deployment confirmation token, as described herein with respect to embodiments relating to the confirmation system 240. This may beneficially ensure that no safety-related software is received from an untrusted deployment system 230.

The safety element 220 is configured for receiving, e.g. via the communication module, an availability indicator indicating the availability of a safety-related software from the deployment system 230, e.g. according to the method 100, particularly as described with regard to making available 110 the safety-related software. The safety element 200 may be configured for storing the availability indicator, or information derived from the availability indicator, in the memory.

The safety element 220 is configured for creating a challenge token. The challenge token may be a challenge token T_{CH} as described with reference to the method 100 and/or according to aspects and/or embodiment described herein. The challenge token may be generated by the controller, e.g. by utilizing a random or pseudorandom number generator (software), and may be stored in the memory.

The safety element 220 is configured for sending a confirmation request comprising the challenge token to a confirmation system 240. The confirmation request may be sent through the packet-based network 250 by the communication module. Sending the confirmation request may be performed according to the method 100, particularly according to the sending 120 of the confirmation request described with respect to the method 100.

The safety element 220 is configured for performing a calculation on the challenge token to create a verification from the challenge token, e.g. as explained herein with reference to method 100, particularly the performing 142 of the calculation. The verification token may be generated by the controller, e.g. by utilizing an algorithm, such as a hash function, according to aspects and/or embodiments described herein.

The safety-related update infrastructure 200 includes a confirmation system 240 communicatively connected to the safety element. The confirmation system 240 and the safety element may be, at least intermittently, communicatively connected via the packet-based network 250. The confirmation system 240 may include a controller, a memory and/or a communication module, e.g. as described with respect to embodiments of the safety element, however, the confirmation system 240 may not require being configured for installing or executing the safety-related software thereon, or even receiving the safety-related software from the deployment system 230 and/or the safety element 220. The confirmation system 240 may be configured for locally being connected, e.g. in a local packet-based network, such as a local area network, particularly a local area network of the passenger transport installation, to the safety element 220. For example, the confirmation system 240 may connect to the local area network and search for safety elements communicatively connected to the local area network, and allow the user to select a safety element for communicatively connecting the confirmation system to the selected safety element.

The confirmation system 240 may further include a display, particularly for displaying information related to the confirmation request, such as the confirmation request, information related to the safety-related software, and/or an update time selector. The confirmation system 240 may include a user interface, particularly an input interface, such as a keyboard or a touchscreen, for receiving a confirmation input from the user. The confirmation system 240 may be configured for receiving a confirmation request including the challenge token from the safety element, performing a calculation on the challenge token to create a confirmation token from the challenge token, receiving a confirmation input from the user and sending a confirmation indicator including the confirmation token to the safety element. Said functions may be performed according to the method 100, particularly receiving 120 the confirmation request including the challenge token, performing 140 a calculation on the challenge token to create a verification token, and sending a confirmation indicator comprising the confirmation token to the safety element 220.

According to embodiments, the confirmation system may be implemented in a handheld device, such as a smartphone, a PDA, a service tool or a laptop computer, e.g. by executing, on the handheld device, a software, such as an app and/or a software program, that causes the handheld device to function as a confirmation tool according to aspects and/or embodiment described herein. Additionally, or alternatively, the confirmation system may be implemented as a human machine interface (HMI) of the passenger transport installation 210, for example included in a service panel of an elevator installation. Additionally, or alternatively, the confirmation system may be implemented as an edge device.

The safety element 220 is configured for receiving the confirmation indicator including a confirmation token from the confirmation system 240. Particularly, the safety element 220 may receive a data packet including the confirmation indicator including the communication module, and process the confirmation indicator with the controller.

The safety element 220 is configured for comparing the confirmation token with the verification token. Comparing the confirmation token with the verification token may be performed as described for the method 100, particularly as described with respect to verifying 150 the confirmation token based on the verification token. For example, the controller may load both the confirmation token and the verification token into a memory and compare if the values of the confirmation token and the verification match, e.g. are identical.

The safety element 220 is configured for installing the safety-related software on the safety element 220, under the condition that the confirmation token matches the verification token. The safety element 220 may be configured for not installing the safety-related software on the safety element 220 if the confirmation token does not match the verification token. The installing the safety-related software may be performed according to the method 100, particularly according to the installing 160. To install the safety-related software, the safety element 220 may request a downloadable data packet including the safety-related software from the deployment system 230 to receive the data packet and intermittently store the data packet in a memory of the safety element. The safety element 220 may then execute an update operation.

According to embodiments, the method 100 may include, and/or the update infrastructure 200 including the safety element 220 may be configured for, requiring a confirmation input from more than one users, such as more than one service technicians, particularly confirmation inputs received by the safety element 220 from more than one different confirmation systems 240, or one or more confirmation systems 240 having different users logged into the confirmation system when providing the confirmation input. The number of required confirmation inputs may be a configurable setting to be set for the safety element 220. The number of required confirmation input may, additionally or alternatively, be a value transmitted together with the information related to the data packets including the safety-related software, e.g. different safety-related software may require a different number of confirmation inputs. Requiring more than one confirmation inputs may beneficially improve safety by requiring different users to review the confirmation request and confirm that the safety-related software should be installed on the safety element.

According to embodiments, the method 100 may include, and/or the update infrastructure 200 including the safety element 220 and the confirmation system 230 may be configured for, sequentially installing several safety-related softwares, e.g. to install several updates in succession. For this, the method 100 described herein may be repeated for the required number of times, except for the installing 160 of the safety related software, until a final confirmation to install all the selected safety-related softwares has been provided, e.g. with the confirmation indicator. This may, for example, be implemented by providing, on the confirmation system, an option to the user to select more than one safety-related softwares to be installed, and by the safety element to install the several safety-related softwares, e.g. upon receiving a confirmation indicator indicating that the several safety-related softwares should be installed. The option to select more than one safety-related softwares may include an option to choose the order in which the safety-related softwares should be installed. The order may be included in the confirmation indicator, and the safety element may install the safety-related softwares in the order indicated by the confirmation indicator. This may beneficially allow the installation of several updates in succession, without requiring a separate confirmation for every update, which may otherwise include, for every update, reconnecting the confirmation system to the safety element, e.g. in cases where the safety element has to reboot or reinitialize after each update.

Alternatively, according to embodiments, the confirmation system 240 may remain connected to the safety element 220 during the update of several safety-related softwares, and the safety element 220 may send, for each selected safety-related software to be installed, a new confirmation request including a new challenge token to the confirmation system, particularly so that the installation of each safety-related software requires a manual confirmation by the user.

According to embodiments, the method 100 may include, and/or the update infrastructure 200 including the safety element 220 and the confirmation system 230 may be configured for, performing a computationally challenging calculation. For example, a calculation, such as a hashing function according to aspects and/or embodiments described herein, may be performed several times in succession, e.g. to generate a hash chain, such as a hash chain resulting in a verification token T_{V}=fⁿ(T_{CH}). The safety element may, before transmitting the confirmation request, calculate a number of successive calculations for a predefined time, such as up to 1 second, up to 2 seconds, 3 - 5 seconds or even up to 10 seconds to arrive at the verification token. and send the number of successive calculations n performed on the challenge token together with the confirmation request. The confirmation system then calculates the same number of successive calculations n to arrive at a valid confirmation token. This may beneficially harden the token exchange against cryptographic attacks. Furthermore, this may beneficially assure that the safety element is capable of performing a high-load calculation for an extended amount of time, thereby preventing the installation of safety-related software on a safety element that is unable to correctly perform the computationally challenging calculation, e.g. due to a hardware fault, e.g. in the controller, the memory or even a power supply. Thus, it can be made certain that the installation is not corrupted by a faulty safety element, which may otherwise result in an inoperable ("bricked") or even unsafe safety element.

Benefits of the described embodiments include the possibility to perform over-the-air updates of safety-related software on safety elements, i.e. without requiring physical interaction with the safety element, while maintaining a high safety standard. In particular, the safety element may be configured to receive safety-related software from a (trusted) deployment system, and the installation may then require a manual review and confirmation by a user operating a (trusted) confirmation system so that it may be ensured that only approved software is installed. This may beneficially reduce the manual effort required for installing safety-related software, thereby improving the overall safety of passenger transport installations by allowing up-to-date safety-related software to be quickly and easily installed.

While the foregoing is directed to some embodiments, other and further embodiments may be devised without departing from the basic scope, and the scope is determined by the claims that follow.

## Claims

1. A method (100) of deploying a safety-related software to a safety element (220) in a passenger transport installation (210) comprising the safety element (220), the method comprising:
receiving by the safety element an availability indicator indicating (110) the safety-related software being available to the safety element (220) from a deployment system (230);
sending (120) a confirmation request comprising a challenge token to a confirmation system (240);
by the confirmation system (240), after receiving the confirmation request, receiving (130) a confirmation input from a user;
by the confirmation system (240), performing (140) a calculation on the challenge token to create a confirmation token from the challenge token;
by the safety element (220), performing (142) the calculation on the challenge token to create a verification token from the challenge token;
by the confirmation system (240), after receiving the confirmation input, sending a confirmation indicator comprising the confirmation token to the safety element (220);
by the safety element (220), verifying (150) the confirmation token based on the verification token;
if the confirmation token matches the verification token, installing (160) the safety-related software on the safety element (220), wherein installing includes downloading the software from the deployment system onto the safety element.

2. The method (100) according to claim 1, wherein the passenger transport installation (210) is an elevator, an escalator or a moving walkway.

3. The method (100) according to claim 1 or 2, wherein the challenge token is created by the safety element (220).

4. The method (100) according to any of the preceding claims, wherein the challenge token is a random number, particularly a unique random number, particularly a random number uniquely created for each confirmation request.

5. The method (100) according to any of the preceding claims, wherein the calculation is deterministic.

6. The method (100) according to any of the preceding claims, wherein the calculation is a hash function and/or a checksum function.

7. The method (100) according to any of the preceding claims, wherein the confirmation system (240) is configured to be accessed by a service technician, and wherein receiving the confirmation input from the user comprises informing the service technician about the safety-related software being available.

8. A passenger transport installation (210) comprising a safety element (220), the safety element (220) comprising:
a controller;
a memory; and
a communication module; wherein
the safety element (220) is configured for:
receiving an availability indicator indicating an availability of safety-related software from a deployment system (230);
creating a challenge token;
sending a confirmation request comprising the challenge token to a confirmation system (240);
performing a calculation on the challenge token to create a verification token from the challenge token;
receiving a confirmation indicator comprising a confirmation token from the confirmation system (240);
comparing the confirmation token with the verification token; and
if the confirmation token matches the verification token, installing the safety-related software on the safety element (220), wherein installing includes downloading the software from the deployment system onto the safety element.

9. The passenger transport installation (210) according to claim 8, wherein the passenger transport installation (210) is an elevator, an escalator or a moving walkway.

10. The passenger transport installation (210) according to claim 8 or 9, wherein the safety element (220) is a safety-related device according to IEC 61508 and/or EN 81 PESSRAL.

11. The passenger transport installation (210) according to any of the claims 8 to 10, wherein the safety element (220) is configured as a controller and/or monitoring device of the passenger transport installation (210).

12. A safety-related software update infrastructure (200) for a passenger transport installation (210) comprising the safety element (220) according to any of the claims 8 to 11, the update infrastructure (200) further comprising:
a deployment system (230) communicatively connected to the safety element (220), wherein the deployment system (230) is configured for making the safety-related software available to the safety element (220);
a confirmation system (240) communicatively connected to the safety element (220), wherein the confirmation system (240) is configured for:
receiving a confirmation request from the safety element (220), the confirmation request comprising a challenge token;
performing a calculation on the challenge token to create a confirmation token from the challenge token;
receiving a confirmation input from a user;
sending a confirmation indicator comprising the confirmation token to the safety element (220).

13. The software update infrastructure (200) according to claim 12, wherein the deployment system (230) and the safety element (220) are communicatively connected via a packet-based network (250).

14. The software update infrastructure (200) according to claim 12 or 13, wherein the confirmation system (240) and the safety element (220) are communicatively connected via a packet-based (250) network.

15. Use of a confirmation system (240) in a software update infrastructure (200) according to any of the claims 12 to 14 according to the method (100) of any of the claims 1 to 7.

## Patentansprüche

1. Verfahren (100) zum Bereitstellen einer sicherheitsrelevanten Software für ein Sicherheitselement (220) in einer Personenbeförderungsanlage (210), die das Sicherheitselement (220) umfasst, wobei das Verfahren umfasst:
Empfangen (110) einer Verfügbarkeitsanzeige durch das Sicherheitselement, die anzeigt, dass die sicherheitsrelevante Software für das Sicherheitselement (220) von einem Bereitstellungssystem (230) verfügbar ist;
Senden (120) einer Bestätigungsanforderung, die ein Challenge-Token umfasst, an ein Bestätigungssystem (240);
durch das Bestätigungssystem (240) nach dem Empfang der Bestätigungsanforderung, Empfangen (130) einer Bestätigungseingabe eines Benutzers;
durch das Bestätigungssystem (240), Durchführen (140) einer Berechnung basierend auf dem Challenge-Token, um aus dem Challenge-Token ein Bestätigungstoken zu erstellen;
durch das Sicherheitselement (220), Durchführen (142) der Berechnung basierend auf dem Challenge-Token, um aus dem Challenge-Token einen Verifizierungs-Token zu erstellen;
durch das Bestätigungssystem (240) nach Empfang der Bestätigungseingabe, Senden eines Bestätigungsindikators, der das Bestätigungstoken an das Sicherheitselement (220) umfasst;
durch das Sicherheitselement (220), Verifizieren (150) des Bestätigungstokens auf der Grundlage des Verifizierungstokens;
wenn das Bestätigungstoken mit dem Verifizierungstoken übereinstimmt, Installieren (160) der sicherheitsrelevanten Software auf dem Sicherheitselement (220), wobei das Installieren das Herunterladen der Software vom Bereitstellungssystem auf das Sicherheitselement umfasst.

2. Verfahren (100) nach Anspruch 1, wobei die Personenbeförderungsanlage (210) ein Aufzug, eine Rolltreppe oder ein Fahrsteig ist.

3. Verfahren (100) nach Anspruch 1 oder 2, wobei das Abfragetoken von dem Sicherheitselement (220) erstellt wird.

4. Verfahren (100) nach einem der vorstehenden Ansprüche, wobei das Abfragetoken eine Zufallszahl ist, insbesondere eine eindeutige Zufallszahl, insbesondere eine für jede Bestätigungsanforderung eindeutig erzeugte Zufallszahl.

5. Verfahren (100) nach einem der vorstehenden Ansprüche, wobei die Berechnung deterministisch ist.

6. Verfahren (100) nach einem der vorstehenden Ansprüche, wobei die Berechnung eine Hash-Funktion und/oder eine Prüfsummenfunktion ist.

7. Das Verfahren (100) gemäß einem der vorstehenden Ansprüche, wobei das Bestätigungssystem (240) so konfiguriert ist, dass ein Servicetechniker darauf zugreifen kann, und wobei das Empfangen der Bestätigungseingabe vom Benutzer das Informieren des Servicetechnikers über die Verfügbarkeit der sicherheitsrelevanten Software umfasst.

8. Personenbeförderungsanlage (210) mit einem Sicherheitselement (220), wobei das Sicherheitselement (220) umfasst:
eine Steuerung;
einen Speicher; und
ein Kommunikationsmodul; wobei
das Sicherheitselement (220) konfiguriert ist für:
Empfangen eines Verfügbarkeitsindikators, der eine Verfügbarkeit von sicherheitsbezogener Software von einem Bereitstellungssystem (230) anzeigt;
Erstellen eines Challenge-Tokens;
Senden einer Bestätigungsanforderung, die das Challenge-Token enthält, an ein Bestätigungssystem (240);
Durchführen einer Berechnung basierend auf dem Challenge-Token, um aus dem Challenge-Token ein Verifizierungstoken zu erstellen;
Empfangen eines Bestätigungsindikators, der ein Bestätigungstoken umfasst, von dem Bestätigungssystem (240);
Vergleichen des Bestätigungstokens mit dem Verifizierungstoken; und
wenn das Bestätigungstoken mit dem Verifizierungstoken übereinstimmt, Installieren der sicherheitsrelevanten Software auf dem Sicherheitselement (220), wobei das Installieren das Herunterladen der Software vom Bereitstellungssystem auf das Sicherheitselement umfasst.

9. Personenbeförderungsanlage (210) nach Anspruch 8, wobei die Personenbeförderungsanlage (210) ein Aufzug, eine Rolltreppe oder ein Fahrsteig ist.

10. Personenbeförderungsanlage (210) nach Anspruch 8 oder 9, wobei das Sicherheitselement (220) eine sicherheitsbezogene Einrichtung gemäß IEC 61508 und/oder EN 81 PESSRAL ist.

11. Personenbeförderungsanlage (210) nach einem der Ansprüche 8 bis 10, wobei das Sicherheitselement (220) als Steuerung und/oder Überwachungseinrichtung der Personenbeförderungsanlage (210) ausgebildet ist.

12. Sicherheitsrelevante Software-Update-Infrastruktur (200) für eine Personenbeförderungsanlage (210) mit dem Sicherheitselement (220) gemäß einem der Ansprüche 8 bis 11, wobei die Update-Infrastruktur (200) ferner umfasst:
ein Bereitstellungssystem (230), das mit dem Sicherheitselement (220) in Verbindung steht, wobei das Bereitstellungssystem (230) dazu konfiguriert ist, die sicherheitsbezogene Software dem Sicherheitselement (220) zur Verfügung zu stellen;
ein Bestätigungssystem (240), das mit dem Sicherheitselement (220) in Verbindung steht, wobei das Bestätigungssystem (240) konfiguriert ist, um:
Empfangen einer Bestätigungsanforderung vom Sicherheitselement (220), wobei die Bestätigungsanforderung ein Challenge-Token umfasst;
Durchführen einer Berechnung des Challenge-Tokens, um aus dem Challenge-Token ein Bestätigungstoken zu erstellen;
Empfangen einer Bestätigungseingabe von einem Benutzer;
Senden eines Bestätigungsindikators, der das Bestätigungstoken umfasst, an das Sicherheitselement (220).

13. Die Software-Update-Infrastruktur (200) gemäß Anspruch 12, wobei das Bereitstellungssystem (230) und das Sicherheitselement (220) über ein paketbasiertes Netzwerk (250) kommunikativ verbunden sind.

14. Die Software-Update-Infrastruktur (200) gemäß Anspruch 12 oder 13, wobei das Bestätigungssystem (240) und das Sicherheitselement (220) über ein paketbasiertes (250) Netzwerk kommunikativ verbunden sind.

15. Verwendung eines Bestätigungssystems (240) in einer Software-Update-Infrastruktur (200) gemäß einem der Ansprüche 12 bis 14 gemäß dem Verfahren (100) gemäß einem der Ansprüche 1 bis 7.

## Revendications

1. Procédé (100) de déploiement d'un logiciel lié à la sécurité sur un élément de sécurité (220) dans une installation de transport de passagers (210) comprenant l'élément de sécurité (220), le procédé comprenant :
La réception par l'élément de sécurité d'un indicateur de disponibilité indiquant (110) que le logiciel lié à la sécurité est disponible pour l'élément de sécurité (220) à partir d'un système de déploiement (230) ;
l'envoi (120) d'une demande de confirmation comprenant un jeton de défi à un système de confirmation (240) ;
par le système de confirmation (240), après réception de la demande de confirmation, réception (130) d'une entrée de confirmation provenant d'un utilisateur ;
par le système de confirmation (240), effectuer (140) un calcul sur le jeton de défi pour créer un jeton de confirmation à partir du jeton de défi ;
par l'élément de sécurité (220), effectuer (142) le calcul sur le jeton de défi pour créer un jeton de vérification à partir du jeton de défi ;
par le système de confirmation (240), après avoir reçu l'entrée de confirmation, envoyer un indicateur de confirmation comprenant le jeton de confirmation à l'élément de sécurité (220) ;
par l'élément de sécurité (220), vérifier (150) le jeton de confirmation sur la base du jeton de vérification ;
si le jeton de confirmation correspond au jeton de vérification, installer (160) le logiciel lié à la sécurité sur l'élément de sécurité (220), dans lequel l'installation comprend le téléchargement du logiciel depuis le système de déploiement vers l'élément de sécurité.

2. Procédé (100) selon la revendication 1, dans lequel l'installation de transport de passagers (210) est un ascenseur, un escalier roulant ou un trottoir roulant.

3. Procédé (100) selon la revendication 1 ou 2, dans lequel le jeton de défi est créé par l'élément de sécurité (220).

4. Procédé (100) selon l'une quelconque des revendications précédentes, dans lequel le jeton de contestation est un nombre aléatoire, en particulier un nombre aléatoire unique, en particulier un nombre aléatoire créé de manière unique pour chaque demande de confirmation.

5. Procédé (100) selon l'une quelconque des revendications précédentes, dans lequel le calcul de l' e est déterministe.

6. Procédé (100) selon l'une quelconque des revendications précédentes, dans lequel le calcul est une fonction de hachage et/ou une fonction de somme de contrôle.

7. Procédé (100) selon l'une quelconque des revendications précédentes, dans lequel le système de confirmation (240) est configuré pour être accessible par un technicien de service, et dans lequel la réception de l'entrée de confirmation de l'utilisateur comprend l'information du technicien de service sur la disponibilité du logiciel lié à la sécurité.

8. Installation de transport de passagers (210) comprenant un élément de sécurité (220), l'élément de sécurité (220) comprenant :
un contrôleur ;
une mémoire ; et
un module de communication ; dans laquelle
l'élément de sécurité (220) est configuré pour :
recevoir un indicateur de disponibilité indiquant la disponibilité d'un logiciel lié à la sécurité à partir d'un système de déploiement (230) ;
créer un jeton de défi ;
envoyer une demande de confirmation comprenant le jeton de défi à un système de confirmation (240) ;
effectuer un calcul sur le jeton de défi afin de créer un jeton de vérification à partir du jeton de défi ;
recevoir un indicateur de confirmation comprenant un jeton de confirmation provenant du système de confirmation (240) ;
comparer le jeton de confirmation avec le jeton de vérification ; et
si le jeton de confirmation correspond au jeton de vérification, installer le logiciel de sécurité sur l'élément de sécurité (220), dans lequel l'installation comprend le téléchargement du logiciel depuis le système de déploiement vers l'élément de sécurité.

9. Installation de transport de passagers (210) selon la revendication 8, dans laquelle l'installation de transport de passagers (210) est un ascenseur, un escalier roulant ou un trottoir roulant.

10. Installation de transport de passagers (210) selon la revendication 8 ou 9, dans laquelle l'élément de sécurité (220) est un dispositif de sécurité selon la norme CEI 61508 et/ou EN 81 PESSRAL.

11. Installation de transport de passagers (210) selon l'une quelconque des revendications 8 à 10, dans laquelle l'élément de sécurité (220) est configuré comme un dispositif de commande et/ou de surveillance de l'installation de transport de passagers (210).

12. Infrastructure de mise à jour de logiciel de sécurité (200) pour une installation de transport de passagers (210) comprenant l'élément de sécurité (220) selon l'une quelconque des revendications 8 à 11, l'infrastructure de mise à jour (200) comprenant en outre :
un système de déploiement (230) connecté de manière communicative à l'élément de sécurité (220), dans lequel le système de déploiement (230) est configuré pour mettre le logiciel lié à la sécurité à la disposition de l'élément de sécurité (220) ;
un système de confirmation (240) connecté de manière communicative à l'élément de sécurité (220), dans lequel le système de confirmation (240) est configuré pour :
recevoir une demande de confirmation de l'élément de sécurité (220), la demande de confirmation comprenant un jeton de défi ;
effectuer un calcul sur le jeton de défi afin de créer un jeton de confirmation à partir du jeton de défi ;
recevoir une entrée de confirmation d'un utilisateur ;
envoyer un indicateur de confirmation comprenant le jeton de confirmation à l'élément de sécurité (220).

13. Infrastructure de mise à jour logicielle (200) selon la revendication 12, dans laquelle le système de déploiement (230) et l'élément de sécurité (220) sont connectés de manière communicative via un réseau à commutation de paquets (250).

14. Infrastructure de mise à jour logicielle (200) selon la revendication 12 ou 13, dans laquelle le système de confirmation (240) et l'élément de sécurité (220) sont connectés de manière communicative via un réseau à commutation de paquets (250).

15. Utilisation d'un système de confirmation (240) dans une infrastructure de mise à jour logicielle (200) selon l'une quelconque des revendications 12 à 14 selon le procédé (100) de l'une quelconque des revendications 1 à 7.
